Europäisches Patentamt

European Patent Office

Office européen des brevets

(19)

(11) Veröffentlichungsnummer: **0 176 667 B1**

# (12) EUROPÄISCHE PATENTSCHRIFT

(45) Veröffentlichungstag der Patentschrift: 03.04.91

(51) Int. Cl.⁵: **B60H 3/06**, F24F 3/16

(21) Anmeldenummer: **85107765.1**

(22) Anmeldetag: **22.06.85**

(54) **Filtervorrichtung für die Frischluftzufuhr zum Fahrgastraum von Kraftfahrzeugen.**

(30) Priorität: 29.09.84 DE 8428718 U
05.03.85 DE 8506196 U

(43) Veröffentlichungstag der Anmeldung:
**09.04.86 Patentblatt 86/15**

(45) Bekanntmachung des Hinweises auf die
Patenterteilung:
**03.04.91 Patentblatt 91/14**

(84) Benannte Vertragsstaaten:
**AT BE CH DE FR GB IT LI NL SE**

(56) Entgegenhaltungen:
EP-A- 0 018 281        EP-A- 0 160 168
CH-A- 545 646         DE-A- 2 846 036
DE-B- 1 302 364       FR-A- 1 500 667
FR-A- 2 075 771       FR-A- 2 295 774

(73) Patentinhaber: **Dörenkämper, Wilhelm**
**Am Fillerschloss 3**
**W-4504 Georgsmarienhütte(DE)**

(72) Erfinder: **Dörenkämper, Wilhelm**
**Am Fillerschloss 3**
**W-4504 Georgsmarienhütte(DE)**

(74) Vertreter: **Busse & Busse Patentanwälte**
**Postfach 1226 Grosshandelsring 6**
**W-4500 Osnabrück(DE)**

**Beschreibung**

Die Erfindung bezieht sich auf Filtervorrichtungen für die Frischluftzufuhr zum Fahrgastraum von Kraftfahrzeugen, mit einer im Bereich eines Lüftungskanals angeordneten, von Frischluft durchströmbaren, einen inneren axialen Strömungskanal begrenzenden Filterhülse.

Es sind bereits Filtervorrichtungen dieser Art bekannt geworden die jedoch in ihrer Leistung begrenzt, schwierig in das Belüftungssystem der Kraftfahrzeuge aufgrund des beschränkten Raumangebots einzubauen und/oder kompliziert in ihrem Aufbau sind, so daß das Auswechseln der Filterhülse erschwert ist. Aus diesen Gründen vermochten sich die bekannten Filtervorrichtungen bislang bei Kraftfahrzeugen nicht durchzusetzen, obwohl im Hinblick auf die hohen Luftverschmutzungen, denen die Insassen von Kraftfahrzeugen im Verkehr ausgesetzt sind, seit langem ein erheblicher Bedarf an solchen Filtervorrichtungen besteht.

EP-A-18 281 beschreibt eine Filtervorrichtung für eine Frischluftzufuhr bei Kraftfahrzeugen mit einer im Bereich eines Lüftungskanals angeordneten, von Frischluft durchströmbaren, einen inneren axialen Strömungskanal begrenzenden Filterhülse, wobei die Filterhülse eine auswechselbare Filtereinheit bildet und ein offenes Stirnende des axialen Strömungskanals der Filterhülse mit dem Lüftungskanal in Strömungsverbindung steht, während das andere Ende des Strömungskanals mittels eines Abdeckorgans geschlossen und die Filterhülse umfangsseitig in im wesentlichen radialer Richtung von außen nach innen von Frischluft durchströmbar ist. Es handelt sich hierbei um einen Hochleistungsvergaserfilter bei Kraftfahrzeugmotoren, der zusätzlich mit einem Zentrifugalabscheider arbeitet und bei dem die Filterhülse in einem mit einem abnehmbaren Deckel versehenen, geschlossenen Behälter untergebracht ist, der auf seinem Umfang mit einem Frischlufteinlaßstutzen und auf seiner dem Deckel gegenüberliegenden Stirnseite mit einem Luftauslaßstutzen für die durch die Filterhülse geströmte Frischluft versehen ist, der mit dem Vergasereinlaß des Fahrzeugmotors verbunden ist.

Der Erfindung liegt die Aufgabe zugrunde, eine Filtervorrichtung für die Frischluftzufuhr zum Fahrgastraum von Kraftfahrzeugen zu schaffen, die eine gute Filterleistung ergibt, einfach in das vorhandene Belüftungssystem eines Kraftfahrzeuges einzubauen ist und ein müheloses Auswechseln der Filterhülse ermöglicht.

Diese Aufgabe wird nach der Erfindung bei einer Filtervorrichtung für eine Frischluftzufuhr bei Kraftfahrzeugen, mit einer im Bereich eines Lüftungskanals angeordneten, von Frischluft durchströmbaren, einen inneren axialen Strömungskanal begrenzenden Filterhülse, wobei die Filterhülse eine auswechselbare Filtereinheit bildet und ein offenes Stirnende des axialen Strömungskanals der Filterhülse mit dem Lüftungskanal in Strömungsverbindung steht, während das andere Ende des Strömungskanals mittels eines Abdeckorgans geschlossen und die Filterhülse umfangsseitig in im wesentlichen radialer Richtung von außen nach innen von Frischluft durchströmbar ist, dadurch gelöst, daß für die Frischluftzufuhr zum Fahrgastraum von Kraftfahrzeugen die Filtereinheit lediglich am äußeren Ende des Lufteinlaßstutzens von diesem frei vorstehend festlegbar ist und daß die Filterhülse an ihren beiden Enden stirnseitige Abschlußringe umfaßt, die mit äußeren Randansätzen für einen leicht lösbaren Verriegelungseingriff mit jeweils einem Aufnahmering versehen sind, von denen der eine dem äußeren Ende des Lufteinlaßstutzens und der andere dem Abdeckorgan zugeordnet ist.

Bei dieser Ausgestaltung kann unter Ausnutzung des am Lufteinlaßstutzen zur Verfügung stehenden Raumangebots die Filtervorrichtung ohne weiteres in das Belüftungssystem des Kraftfahrzeugs einbezogen werden, wobei durch das den inneren axialen Strömungskanal der Filterhülse schließende Abdeckorgan am äußeren Ende der Filterhülse der einströmenden, mit Schadstoffen beladenen Frischluft ein Strömungsweg von außen nach innen durch die Wandung der Filterhülse hindurch und von dort in den Lufteinlaßkanal hinein mit Hilfe des üblicherweise vorhandenen Frischluftgebläses aufgezwungen wird. Hieraus resultiert eine hohe Filterleistung. Dabei läßt sich die Verbindung der Filtereinheit mit dem äußeren Ende des Lufteinlaßstutzens, wie es zum Auswechseln der Filterhülse erforderlich ist, mühelos lösen, so daß die Filtereinheit rasch ausgewechselt werden kann.

In weiterer Ausgestaltung der Erfindung ist vorgesehen, daß das Abdeckorgan zwischen einer den inneren axialen Strömungskanal schließenden und einer diesen stirnseitig freigebenden Stellung an der Filtereinheit bewegbar abgestützt ist. In ihrer den inneren axialen Strömungskanal der Filterhülse stirnseitig freigebenden Stellung ermöglicht dabei das Abdeckorgan eine Umgehung der Filterhülse bzw. deren von dem Filtermaterial gebildeter Wandung in der Weise, daß die Frischluft unmittelbar stirnseitig in den inneren axialen Strömungskanal der Filterhülse eintritt, um von diesem wiederum unmittelbar in den Lüftungskanal des Kraftfahrzeuges zu gelangen. Eine solche direkte, und damit vermehrte Frischluftzufuhr zum Lüftungskanal des Kraft fahrzeugs kann bei extremen Witterungsbedingungen im Winter, bei großer Kälte und Feuchtigkeit, erforderlich sein, um die Scheiben des Kraftfahrzeugs, insbesondere die Windschutzscheibe, möglichst schnell im Anfahrbetrieb zu defrosten. Auf diese Weise kann etwa bestehenden einschlägigen gesetzlichen Bestimmungen entsprochen werden, und es besteht ferner die Möglichkeit, die Filterhülse bei starker Verschmutzung des Filtermaterials durch öffnen der äußeren Abdeckklappe zu umgehen.

Das Abdeckorgan kann vorteilhaft von einer um eine in Einbaustellung der Filterhülse horizontale Achse schwenkbaren Abdeckklappe gebildet sein. Unter Berücksichtigung der vorhandenen Raumverhältnisse kann das Abdeckorgan jedoch auch als um eine in Einbaustellung der Filterhülse vertikale Achse schwenkbare Abdeckklappe, etwa nach Art der im Frischluftansaugkanal des Kraftfahrzeugs üblichen Drosselklappe, ausgebildet sein. Ferner kann aus den gleichen Gründen eine Ausbildung des Abdeckorgans als Schieber zweckmäßig sein.

Die Filterhülse selbst kann in hinsichtlich des Filtermaterials und der Hülsenkonstruktion an sich bekannter Weise ausgeführt sein und umfaßt vorzugsweise ein hydrophobes Faservlies in Sternfaltung zur Vergrößerung der Filterfläche. An solchen hydrophoben Faservliesmaterialien kommen vor allem Glasfaser-, Kunststoff- und Metallfaservliese in Betracht. Bei der derzeit bevorzugten Verwendung eines Glasfaservlieses mit einer Filterfeinheit von 10 $\mu$m erreicht man eine Filtrierung von Schmutzpartikeln mit einem Durchmesser von 10 $\mu$m im Umfang von 100%, während Schmutzpartikel mit einem Durchmesser von beispielsweise 5 $\mu$m und 3 $\mu$m noch in einem Umfang von 80 % bzw. 60 % ausfiltriert werden. So werden bei einer Filterfeinheit von 10 $\mu$m vor allem Sand, Kohlenstaub, Pflanzensporen, Blütenstaub, Flugasche usw. ausfiltriert, während bei einer Filterfeinheit von 5 $\mu$m bzw. 3 $\mu$m auch lungenschädigender Staub, Bakterien, Farbpigmente, Insektenpulver, Schwefelnebel, Hüttenstaub und -abgase usw. ausfiltriert werden. Gute Ergebnisse werden auch mit einem geeigneten Kunststoffvlies erzielt.

Abgesehen von der Filterfläche, die durch die Sternfaltung vergrößert werden kann, ist für den Luftdurchsatz der Filterhülse der mittlere Abstand zwischen benachbarten Sternfalten der Filterhülse von Bedeutung. Dieser mittlere Abstand wird in einer zwischen der äußeren und der inneren Umfangsebene der Filterhülse gelegenen mittleren Umfangsebene gemessen und beträgt vorteilhaft etwa 0,5 bis 10 mm.

Weitere Merkmale und Vorteile der Erfindung ergeben sich aus den weiteren Unteransprüchen und der nachstehenden Beschreibung in Verbindung mit der Zeichnung, in der ein Ausführungsbeispiel des Gegenstands der Erfindung veranschaulicht sind. In der Zeichnung zeigen:

Fig. 1 einen Axialschnitt einer erfindungsgemäßen Filtervorrichtung und

Fig. 2 einen Querschnitt durch die obere Hälfte der Filtervorrichtung nach der Linie II-II der Fig. 1.

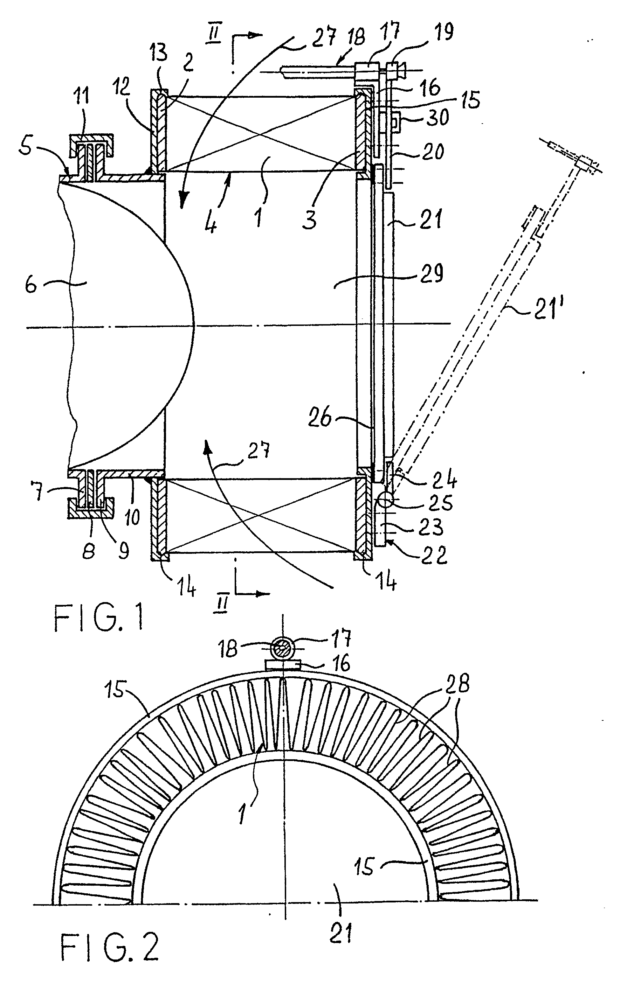

Die in der Zeichnung dargestellte Filtervorrichtung für die Frischluftzufuhr zum Fahrgastraum von Kraftfahrzeugen umfaßt eine Filterhülse 1, die mit stirnseitigen Abschlußringen 2 und 3 an ihren beiden Enden eine auswechselbare Filtereinheit 4 bildet, die als Ganzes am äußeren Ende des Lufteinlaßstutzens des vorhandenen Belüftungssystems des Kraftfahrzeuges festgelegt ist. Der Lufteinlaß- bzw. -ansaugstutzen 5 besitzt in seinem Frischluftansaugkanal eine Drosselklappe 6, die vom Armaturenbrett aus, wie bekannt, verstellbar und in Fig. 1 in ihrer am weitesten geöffneten Stellung veranschaulicht ist.

Zur Festlegung der Filtereinheit am Lufteinlaßstutzen 5 ist dieser an seinem äußeren Ende mit einem Randflansch 7 versehen, gegen den unter Zwischenlegung einer Ringdichtung 8 ein entsprechender Randflansch 9 eines Rohrstücks 10 gegengelegt ist. Mit Hilfe eines umfangsseitig aufgesetzten Einfaßringes 11 sind die beiden Flansche 7 und 9 mit der zwischen ihnen liegenden Ringdichtung 8 z.B. durch Klemmwirkung zusammengeschlossen. Aus Montagegründen ist der Einfaßring 11 vorzugsweise entlang einer Durchmesserebene geteilt.

An dem vom Randflansch 9 abgewandten Ende des Rohrstücks 10 ist ein Aufnahmering 12 z.B. durch Verschweißung befestigt. Der Aufnahmering 12 ist zur Aufnahme des Abschlußrings 2 der Filterhülse 1 ausgebildet und zu diesem Zweck an seinem inneren Ende mit einem der Dicke des Abschlußringes 2 entsprechenden Abstand vom freien Ende des Rohrstücks 10 angeordnet, während sein äußeres Ende 13 um ein entsprechendes Maß zur Filterhülse 1 hin im rechten Winkel abgewinkelt ist und am Innenumfang eine Ringnut ausbildet. Der Abschlußring 2 ist an seinem Innenumfang auf den Außenumfang des Rohrstücks 10 aufgesetzt und an seinem Außenumfang mit einem äußeren, über den Außenumfang der Filterhülse 1 vorstehenden Randansatz 14 versehen, der sich über den gesamten Umfang des Abschlußrings 2 erstrecken kann und im Einbauzustand der Filtereinheit 4 durch Klemm- oder Rasteingriff in der inneren Ringnut des Aufnahmerings 12 gehalten ist.

Der Abschlußring 3 hat die gleiche Ausbildung wie der Abschlußring 2 und ist mit seinem äußeren Randansatz 14 in die innere Ringnut eines Aufnahmerings 15, der die gleiche Ausbildung wie der Aufnahmering 12 hat und spiegelbildlich zu diesem angeordnet ist, mit Klemmeingriff eingesetzt. Mit der Außenseite des Aufnahmerings 15 ist dabei ein im Querschnitt L-förmiger Haltering 16 verbunden, z.B. verschraubt, dessen äußerer, kurzer Schenkel mit einem Befestigungsring 17 eines Bowdenzuges 18 fest verbunden, z.B. verschweißt ist. Mit dem Seilbefestigungsteil 19 des Bowdenzuges ist eine Verbindungslasche 20 vereinigt, deren freies, unteres Ende mit dem oberen Ende einer Abdeckklappe 21 fest verbunden, z.B. verschraubt ist. Diese Verbindung ist in einem abgesetzten Randbereich der Abdeckklappe 21 vorgenommen.

In dem der Verbindungslasche 20 diametral gegenüberliegenden unteren Endbereich ist die Abdeckklappe 21 mittels eines Scharniers 22 am Aufnahmering 15 schwenkbar abgestützt. Ein Teil 23 des Scharniers 22 ist dabei am Aufnahmering 15 befestigt, während der andere Scharnierteil 24 an der Abdeckklappe 21, wiederum in deren abgesetztem Randbereich, befestigt ist. Hierdurch ist die Abdeckklappe 21 in der in der Zeichnung dargestellten Einbaustellung der Filtereinheit 4 um die horizontale Scharnierachse 25 schwenkbar, die dem unteren Endbereich der Abdeckklappe 21 in deren mittlerer Vertikalebene zugeordnet ist. Der Befestigungspunkt der Verbindungslasche 20 des Bowdenzugs 18 an der Abdeckklappe 21 liegt dabei dem Scharnier 22 diametral gegenüber. Hierdurch ist die Abdeckklappe 21 durch Betätigung des Bowdenzugs 18 vom Fahrgastraum aus aus der in der Zeichnung in vollen Linien dargestellten Schließstellung in die strichpunktiert eingezeichnete Offenstellung 21' und umgekehrt bewegbar.

In ihrer Schließstellung deckt die Abdeckklappe 21 die vom Abschlußring 3 umgrenzte Stirnöffnung über eine zwischengelegte Ringdichtung 26 ab, so daß die vom Frischluftgebläse des Kraftfahrzeugs angesaugte Umgebungsluft entsprechend den Richtungspfeilen 27 (Fig. 1) durch die von sternförmig gefaltetem Filtermaterial 28 gebildete Wand der Filterhülse 1 hindurch in den inneren axialen Strömungskanal 29 der Filterhülse 1 eintritt, um von da weiter über das Rohrstück 10 und den Lufteinlaßstutzen 5 in den Lüftungskanal des Belüftungssystems zu gelangen. Die Filterhülse 1 steht dabei mit ihrem Filtermaterial 28 an ihrem Außenumfang in offener Verbindung mit der Umgebung und entsprechend an ihrem Innenumfang in offener Verbindung mit dem axialen Strömungskanal 29.

Bei starker Verschmutzung des Filtermaterials 28 kann die Abdeckklappe 21 durch Betätigung des Bowdenzugs 18 in die Stellung 21' gebracht werden, in der die aus der Umgebung angesaugte Frischluft unmittelbar durch die freigelegte äußere Stirnöffnung des Strömungskanals 29, unter Umgehung des Filter materials 28, angesaugt wird und in den Lufteinlaßstutzen 5 des Belüftungssystems gelangt. Die Abdeckklappe 21 kann aber auch in die Stellung 21' gebracht werden, um bei ungünstigen Witterungsbedingungen durch vermehrte Frischluftzufuhr die Sichtfreiheit vor allem im Bereich der Windschutzscheibe schnell herbeizuführen bzw. zu gewährleisten. Dabei kann an dem Haltering 16 ein Schalter 30 od. dgl. Kontaktgeber befestigt sein, der in den Verstellweg der mit der Abdeckklappe 21 mitbewegten Verbindungslasche 20 hineinragt und eine Anzeige im Fahrgastraum bewirkt, wenn sich die Abdeckklappe in ihrer geöffneten Stellung befindet. Hierdurch wird der Fahrer darauf aufmerksam gemacht, daß, wenn kein Bedarf an vermehrter Frischluftzufuhr mehr besteht, die Abdeckklappe zu schließen ist, damit die Filtervorrichtung ihre Filterwirkung entfalten kann.

Sofern die Filtereinheit 4 nach längerer Betriebsdauer ausgewechselt werden muß, läßt sich dies sehr einfach bewerkstelligen, da sich der Rasteingriff der stirnseitigen Abschlußringe 2 und 3 der Filterhülse 1 mit den Aufnahmeringen 12 und 15 aufgrund der Elastizität des für die zur Herstellung des Rasteingriffs zusammenwirkenden Bauteile insbesondere verwendeten Kunststoffmaterials leicht lösen und wieder herstellen läßt.

## Ansprüche

1. Filtervorrichtung für eine Frischluftzufuhr bei Kraftfahrzeugen, mit einer im Bereich eines Lüftungskanals angeordneten, von Frischluft durchströmbaren, einen inneren axialen Strömungskanal (29) begrenzenden Filterhülse (1), wobei die Filterhülse (1) eine auswechselbare Filtereinheit (4) bildet und ein offenes Stirnende des axialen Strömungskanals (29) der Filterhülse (1) mit dem Lüftungskanal in Strömungsverbindung steht, während das andere Ende des Strömungskanals (29) mittels eines Abdeckorgans (21) geschlossen und die Filterhülse (1) umfangsseitig in im wesentlichen radialer Richtung von außen nach innen von Frischluft durchströmbar ist, **dadurch gekennzeichnet**, daß für die Frischluftzufuhr zum Fahrgastraum von Kraftfahrzeugen die Filtereinheit (4) lediglich am äußeren Ende des Lufteinlaßstutzens (5) von diesem frei vorstehend festlegbar ist und daß die Filterhülse (1) an ihren beiden Enden stirnseitige Abschlußringe (2,3) umfaßt, die mit äußeren Randansätzen (14) für einen leicht lösbaren Verriegelungseingriff mit jeweils einem Aufnahmering (12,15) versehen sind, von denen der eine (12) dem äußeren Ende des Lufteinlaßstutzens (5) und der andere (15) dem Abdeckorgan (21) zugeordnet ist.

2. Vorrichtung nach Anspruch 1, dadurch gekennzeichnet, daß das Abdeckorgan (21) zwischen einer den inneren axialen Strömungskanal (29) schließenden und einer diesen stirnseitig freigebenden Stellung (21') an der Filtereinheit (4) bewegbar abgestützt ist.

3. Vorrichtung nach Anspruch 1 oder 2, dadurch gekennzeichnet, daß die Filterhülse (1) an ihrem Außenumfang in offener Verbindung mit der Umgebung und an ihrem Innenumfang in offener Verbindung mit dem axialen Strömungskanal (29) steht.

4. Vorrichtung nach einem der Ansprüche 1 bis 3, dadurch ge kennzeichnet, daß das Abdekkorgan von einer um eine in Einbaustellung der Filterhülse (1) horizontale Achse (25) schwenkbaren Abdeckklappe (21) gebildet ist.

5. Vorrichtung nach einem der Ansprüche 1 bis 4, dadurch gekennzeichnet, daß das Abdeckorgan (21) mit einem vom Fahrgastraum aus betätigbaren Verstellglied (18) (Bowdenzug od. dgl.) verbunden ist.

6. Vorrichtung nach einem der Ansprüch 1 bis 5, dadurch gekennzeichnet, daß dem Abdeckorgan (21) ein Schalter (30) od. dgl. Kontaktgeber für eine Anzeige seiner offenen oder geschlossenen Stellung zugeordnet ist.

7. Vorrichtung nach den Ansprüchen 4 und 5, dadurch gekennzeichnet, daß das Verstellglied (18) mittels eines Verbindungsteils (20) in einem der Schwenkachse (25) der Abdeckklappe (21) gegenüberliegenden Bereich an der Abdeckklappe (21) befestigt ist.

8. Vorrichtung nach Anspruch 7, dadurch gekennzeichnet, daß die Schwenkachse (25) dem unteren Endbereich der Abdeckklappe (21) in deren mittlerer Vertikalebene zugeordnet und das Verbindungsteil (20) des Verstellglieds (18) in einem diametral gegenüberliegenden Bereich an der Abdeckklappe (21) befestigt ist.

9. Vorrichtung nach einem der Ansprüche 1 bis 8, dadurch gekennzeichnet, daß die Filterhülse (1;109) von einem hydrophoben Faservlies in Sternfaltung gebildet ist.

10. Vorrichtung nach Anspruch 9, dadurch gekennzeichnet, daß der mittlere Abstand zwischen benachbarten Sternfalten der Filterhülse (1;109) etwa 0,5 bis 10 mm beträgt.

11. Vorrichtung nach Anspruch 9 oder 10, dadurch gekennzeichnet, daß in die Sternfaltung des Faservlieses ein Stützgewebe einbezogen ist.

## Claims

1. A filter device for a fresh air supply to motor vehicles and with, disposed in the region of a ventilation duct, and adapted to have fresh air flowing through it, a filter cartridge (1) which defines an inner axial flow passage (29), the filter cartridge (1 ) constituting an exchangeable filter unit (4), an open end of the axial flow passage (24) of the filter cartridge (1) communicating with the ventilation duct to allow a flow to pass through it, while the other end of the flow passage (29) is occluded by means of a covering member (21 ), the filter cartridge (1) being capable of having fresh air traverse it from the outside inwardly in a substantially radial direction from its periphery, characterised in that for the supply of fresh air to the passenger compartment of motor vehicles, the filter unit (4) can only be secured at the outer end of the air inlet connector (5) to project freely from this latter, the filter cartridge (1) comprising at both ends closure rings (2, 3) which are provided with outer marginal projections (14) for an easily separable locking engagement with a respective receiving ring (12, 15) of which one (12) is associated with the outer end of the inlet connector (5) while the other (15) is associated with the covering member (21).

2. A device according to claim 1 , characterised in that the covering member (21 ) is supported in such a way that it is movable on the filter unit (4) between a position (21') which closes the inner axial flow passage (29) and a position (21') which opens up the end of this passage.

3. A device according to claim 1 or 2, characterised in that on its outer periphery, the filter cartridge (1) is in open communication with the environment while on its inner periphery it is in open communication with the axial flow passage (29).

4. A device according to one of claims 1 to 3, characterised in that the covering member consists of a covering flap (21) which is pivotable about a horizontal axis (25) when the filter cartridge (1) is in the installed position.

5. A device according to one of claims 1 to 4, characterised in that the covering member (21) is connected to an adjusting member (18) (a Bowden control cable or the like) which can be actuated from the passenger compartment.

6. A device according to one of claims 1 to 5, characterised in that there is associated with the covering member (21) a switch (30) or like contact-making means to display its open or closed position.

7. A device according to claims 4 and 5, characterised in that the adjusting member (18) is by means of a connecting member (20) fixed on the covering flap (21) in an area opposite the pivoting axis (25) of the covering flap (21).

8. A device according to claim 7, characterised in that the pivoting axis (25) is associated with the lower end portion of tie covering flap (21) in its median vertical plane while the connecting part (20) of the adjusting member (18) is fixed on the covering flap (21) in a diametrically oppositely disposed area thereof.

9. A device according to one of claims 1 to 8, characterised in that the filter cartridge (1; 109) is constituted by a hydrophobic fibre fleece which is folded in a stellate pattern.

10. A device according to claim 4, characterised in that the average distance between adjacent folds of the stellate pattern of the filter cartridge (1; 109) is about 0.5 to 10 mm.

11. A device according to claim 9 or 10, characterised in that a bracing fabric is incorporated into the fibre fleece which is folded in a stellate pattern.

**Revendications**

1. Dispositif de filtration pour l'admission d'air frais dans des véhicules automobiles, comportant un manchon de filtration (1) disposé dans la zone d'un canal de ventilation, perméable à l'air frais et délimitant un canal d'écoulement intérieur axial (29), le manchon de filtration (1) constituant une unité de filtration (4) remplaçable et une extrémité d'about ouverte du canal d'écoulement (29) du manchon de filtration (1) étant en communication d'écoulement avec le canal de ventilation, tandis que l'autre extrémité du canal d'écoulement (29) est obturée par un élément obturateur (21) et le manchon de filtration (1), au niveau de sa circonférence, laisse passer de l'air frais, de l'extérieur vers l'intérieur, dans une direction en substance radiale, caractérisé en ce que, en vue de l'admission d'air frais dans un habitacle de véhicule, l'unité de filtration (4) est simplement fixée en saillie à l'extrémité extérieure de la tubulure d'entrée d'air (5) et que le manchon de filtration (1) comprend, à ses deux extrémités, des anneaux de parement d'about (2, 3) qui sont pourvus de saillies marginales extérieures (14) destinées chacune à assurer un engagement de verrouillage facilement détachable avec un anneau de réception (12, 15), dont l'un (12) est associé à l'extrémité extérieure de la tubulure d'entrée d'air (5) et l'autre (15), à l'élément obturateur (21).

2. Dispositif suivant la revendication 1, caractérisé en ce que l'élément obturateur (21) est monté mobile sur l'unité de filtration (4) entre une position de fermeture du canal d'écoulement intérieur axial (29) et une position d'ouverture (21') de ce canal vers l'avant.

3. Dispositif suivant la revendication 1 ou 2, caractérisé en ce que le manchon de filtration (1), sur sa circonférence extérieure, est en communication ouverte avec l'atmosphère ambiante et, sur sa circonférence intérieure, en communication ouverte avec le canal d'écoulement axial (29).

4. Dispositif suivant l'une quelconque des revendications 1 à 3, caractérisé en ce que l'élément obturateur est constitué d'un clapet (21) pivotant autour d'un axe horizontal (25) dans une position de montage du manchon de filtration (1).

5. Dispositif suivant l'une quelconque des revendications I à 4, caractérisé en ce que l'élément obturateur (21) est relié à un élément de réglage (18) pouvant être actionné à partir de l'habitacle (par un câble Bowden ou une commande analogue) à partir du compartiment.

6. Dispositif suivant l'une quelconque des revendications 1 à 5, caractérisé en ce qu'à l'élément obturateur (21) est associé un commutateur (30) ou un contacteur analogue servant à afficher sa position ouverte ou fermée.

7. Dispositif suivant la revendication 4 ou 5, caractérisé en ce que l'élément de réglage (18) est fixé au clapet (21) par une pièce de liaison (10) dans une zone opposée à l'axe de pivotement (25) du clapet (21).

8. Dispositif suivant la revendication 7, caractérisé en ce que l'axe de pivotement (25) est associé au plan vertical médian de la zone d'extrémité inférieure du clapet (21) et la pièce de liaison (20) de l'élément de réglage (18) est fixée au clapet (21), dans une zone diamétralement opposée.

9. Dispositif suivant l'une quelconque des revendications 1 à 8, caractérisé en ce que le manchon de filtration (1; 109) est constitué d'un non-tissé hydrophobe plissé en accordéon.

10. Dispositif suivant la revendication 9, caractérisé en ce que l'écart moyen entre des plis en accordéon voisins du manchon de filtration (1; 109) est de 0,5 à 10 mm.

11. Dispositif suivant la revendication 9 ou 10, caractérisé en ce que dans les plis en accordéon du non-tissé est inséré un tissu de support.

FIG. 1

FIG. 2

EP 0 176 667 B1

8